# EUROPÄISCHE PATENTSCHRIFT

(11) **EP 3 362 699 B1**
(45) Veröffentlichungstag und Bekanntmachung des Hinweises auf die Patenterteilung: **09.09.2020**
(21) Anmeldenummer: 16744305.0
(22) Anmeldetag: 23.07.2016
(51) Int. Cl.: F16D 65/56, F16D 66/02

(54) **ÜBERWACHUNGSEINRICHTUNG FÜR EINE SCHEIBENBREMSE EINES KRAFTFAHRZEUGES**
MONITORING DEVICE FOR A DISK BRAKE OF A MOTOR VEHICLE
DISPOSITIF DE SURVEILLANCE POUR FREIN À DISQUE D'UN VÉHICULE AUTOMOBILE

(30) Priorität: 12.10.2015 DE 102015013199
(43) Veröffentlichungstag der Anmeldung: 22.08.2018
(73) Patentinhaber: WABCO Europe BVBA, 1170 Brussels (BE)
(72) Erfinder: JOHN, Michael, 31275 Lehrte (DE); STUMPF, Martin, 68623 Lampertheim (DE)
(74) Vertreter: Copi, Joachim
(86) Internationale Anmeldenummer: PCT/EP2016/001286
(87) Internationale Veröffentlichungsnummer: WO 2017/063723

(56) Entgegenhaltungen:
- EP-A1- 1 538 364
- DE-A1-102012 006 088
- JP-A- 2006 213 080

## Beschreibung

Die Erfindung betrifft eine Überwachungseinrichtung für eine Scheibenbremse zur Überwachung einer Relativposition eines Bremsbelages der Scheibenbremse sowie eine Scheibenbremse, insbesondere für ein Kraftfahrzeug.

Scheibenbremsen in Kraftfahrzeugen weisen Bremsbeläge auf, die in Abhängigkeit einer Betätigung eines Bremswertgebers von einer Druckspindel auf eine mit einem abzubremsenden Rad verbundene Bremsscheibe gedrückt werden, um eine Bremswirkung auf die Bremsscheibe und das Rad übertragen zu können. Derartige Bremsbeläge verschleißen bei der Nutzung der Scheibenbremse, d.h. ihre Dicke nimmt ab. Dadurch verlängert sich ein Bremshub der Bremsbeläge, d.h. der Weg, den die Bremsbeläge aus einer Lösestellung, in der der Bremswertgeber nicht betätigt ist, in eine Bremsstellung bei Betätigung des Bremswertgebers zurücklegen, um eine Bremswirkung zu erreichen.

Um auch bei Verschleiß eine schnelle Bremswirkung bei geringem Bremshub zu erreichen, ist eine Nachstelleinrichtung, beispielsweise ein Nachstellgetriebe vorgesehen, mit der die abnehmende Dicke der Bremsbeläge ausgeglichen werden kann, indem die Bremsbeläge wieder näher an die Bremsscheibe verstellt werden. Dadurch kann in etwa der ursprüngliche Bremshub eingestellt werden, der bei neuen Bremsbelägen vorhanden ist. Wird der Bremsbelag bei einem bestimmten Verschleiß ausgetauscht, wird die Nachstelleinrichtung beispielsweise durch ein Rückstellwerkzeug wieder in die ursprüngliche Ausgangsposition rückgestellt, um den Bremshub wieder an die neuen Beläge anzupassen.

Um den Verschleiß auch messen zu können, ist eine Überwachungseinrichtung vorgesehen, die mit der Nachstelleinrichtung derartig in Wirkverbindung steht, dass sie einen Nachstellweg der Nachstelleinrichtung erfasst, aus dem direkt der Verschleiß folgt.

Die EP 1 538 364 B1 offenbart dazu eine Scheibenbremse, bei der die Druckspindel mit den Bremsbelägen durch ein Nachstellgetriebe an die Bremsscheibe angenähert werden kann, indem die Druckspindel mit zunehmendem Verschleiß aus einer Mutter herausgeschraubt wird. Um den Verschleiß und auch den Bremshub zu messen, ist eine Verschleiß-Überwachungseinrichtung vorgesehen, die durch einen längsbeweglichen, federvorgespannten Stift gebildet ist, der sich an einer Stirnseite der sich bewegenden Druckspindel abstützt und derartig am Bremssattel der Scheibenbremse befestigt ist, dass eine Bewegung der Druckspindel unter Federbeaufschlagung auf den Stift übertragen wird.

Wird die Druckspindel zum Ausgleich des Verschleißes aus der Mutter herausgeschraubt, bewegt sich auch der Stift relativ zum Bremssattel, was optisch oder elektrisch erfasst werden kann. Weiterhin wird der Stift auch bei einer Betätigung der Bremse, bei der sich die Druckspindel in Richtung zur Bremsscheibe bewegt (Bremshub), verstellt. Somit können Relativverschiebungen, die aus dem Verschleiß oder aus dem Bremshub resultieren, direkt und unverfälscht vom Stift erfasst werden. Die erfassten Relativverschiebungen können von einem Potentiometer erkannt und deren Signale über einen elektrischen Anschluss weiterverarbeitet werden.

Nachteilig bei dieser Lösung ist, dass das Potentiometer der Verschleiß-Überwachungseinrichtung zur elektrischen Erfassung der Bewegung des Stifts eine beschränkte Lebensdauer aufweist, so dass es zu einem Austausch des Potentiometers während der Lebenszeit der Scheibenbremse kommen kann.

Die WO 2013124247 A1 zeigt eine Überwachungseinrichtung zum Messen eines Nachstellweges einer Nachstelleinrichtung. Demnach kämmt an der Druckspindel der Nachstelleinrichtung ein Zahnrad, das auf einer Welle sitzt, so dass bei einer Drehung der Druckspindel eine Drehung der Welle bewirkt wird. Die Drehung der Welle kann von einer Überwachungseinrichtung erfasst werden. Die Überwachungseinrichtung weist dazu einen Abschnitt mit Keilen und Nuten auf, über die die Drehung der Welle auf eine Hohlwelle übertragen wird. Die Drehung der Hohlwelle wird von einem Untersetzungsgetriebe auf einen Drehkörper übertragen. Der Drehkörper ist als zweipoliger Magnet ausgeführt, dessen Drehung kontaktlos von einem Hall-Sensor erfasst wird und in den entsprechenden Nachstellweg bzw. Verschleiß umgerechnet werden kann.

Nachteilig dabei ist, dass sehr viele Bauteile, insbesondere verschleißende Zahnräder für das Untersetzungsgetriebe erforderlich sind, um den Verschleiß zu erfassen. Zudem ist die Überwachungseinrichtung als externe Einrichtung zum Aufsetzen und Befestigen auf dem Gehäuse des Bremssattels vorgesehen, wodurch zusätzlicher Bauraum am Bremssattel benötigt wird. Zudem kann der Bremshub bei Betätigung der Scheibenbremse von der Überwachungseinrichtung nicht erfasst werden, da sich die Nachstelleinrichtung beim Bremsen nicht dreht.

Eine Rückstellung wird durch ein zusätzliches Rückstellwerkzeug gewährleistet, das bei jeder Rückstellung durch die Überwachungseinrichtung gesteckt werden muss, um die Druckspindel wieder in ihre ursprüngliche Ausgangsposition zu verdrehen; somit ist eine Rückstellung aufwendig und es wird ein spezielles Werkzeug benötigt.

Die EP 1 633 992 B1 zeigt weiterhin eine Überwachungseinrichtung zum Überwachen des Verschleißes eines Bremsbelages von Scheibenbremsen. Demnach sind ein erster Sensor und ein als Überwachungseinrichtung ausgebildeter zweiter Sensor vorgesehen, wobei der erste Sensor erfasst, ob eine Bremsung vorliegt und der zweite Sensor in Abhängigkeit davon die Bewegung der Nachstelleinrichtung kontaktlos misst.

Dazu ist im Inneren der Nachstelleinrichtung ein bremsbelagfestes, als Röhre ausgeführtes, magnetisches Messelement vorgesehen, das linear verstellbar um einen Hall-Sensor angeordnet ist. Die Länge der magnetischen Röhre entspricht dabei in etwa einem maximal möglichen Verstellweg, um den der Bremsbelag beim Bremsen (Bremshub) bzw. durch die Nachstelleinrichtung (Nachstellweg) verstellt werden kann. Der Hall-Sensor ist demgegenüber kleiner ausgeführt, so dass der Hall-Sensor in Abhängigkeit der Position des Bremsbelages tiefer oder weniger tief in die Röhre eintaucht und dadurch vom Hall-Sensor je nach Eintauchtiefe in die Röhre ein entsprechendes Signal erzeugt wird, aus dem der zurückgelegte Weg des Bremsbelages ermittelt werden kann.

Nachteilig dabei ist, dass das Messelement als langgezogene magnetische Röhre ausgebildet ist. Eine derartige Röhre über eine große Länge magnetisch homogen auszuführen, ist sehr aufwändig, so dass es zu Messungenauigkeiten kommen kann, wenn das Magnetfeld innerhalb der magnetischen Röhre variiert. Zudem ist das Einbringen der langgezogenen Röhre in die Nachstelleinrichtung aufwändig, so dass ein Austausch oder ein Nachrüsten mit hohem Montageaufwand verbunden ist. Ein Ausrichten der magnetischen Röhre in der Nachstelleinrichtung gegenüber dem Hall-Sensor ist zudem schwierig.

Weiterhin ist zum Identifizieren, ob das ausgegebene Signal den Bremshub oder den Nachstellweg angibt, eine zusätzliche Signalübermittlung nötig, die in Abhängigkeit des vom ersten Sensor ermittelten Ergebnisses angibt, ob eine Bremsung vorliegt oder nicht, d.h. ein Bremshub ausgegeben wird oder ein Nachstellweg. Die nachgeordnete Elektronik kann erst mit diesem zusätzlichen Signal entscheiden, ob ein Bremshub oder einen Verschleiß berechnen werden soll.

Die DE 10 2012 006088 A1 zeigt weiterhin eine Schiebesattel-Scheibenbremse für Nutzfahrzeuge mit einer Überwachungseinrichtung. Die Überwachungseinrichtung weist eine Sensoreinheit und ein Messelement auf. Zwischen dem Messelement und der Sensoreinheit ist ein Vorspannelement zum Vorspannen des Messelements gegen eine Druckspindel der Scheibenbremse angeordnet.

Weiterhin beschreibt die JP 2006 213080 A eine Scheibenbremse für Nutzfahrzeuge mit einer Überwachungseinrichtung, wobei die Sensoreinheit der Überwachungseinrichtung als RF-Sensoreinheit ausgebildet ist.

Der Erfindung liegt somit die Aufgabe zugrunde, eine Überwachungseinrichtung für eine Scheibenbremse bereitzustellen, die einfach aufgebaut und langlebig ist und zudem einfach in eine Scheibenbremse eingebaut bzw. nachgerüstet werden kann. Weiterhin ist eine Aufgabe der Erfindung, eine Scheibenbremse bereitzustellen, in der in einfacher Weise und mit einer hohen Lebensdauer eine Relativbewegung eines Bremsbelages überwacht werden kann und die zudem einfach aufgebaut ist.

Diese Aufgabe wird durch eine Überwachungseinrichtung gemäß Anspruch 1 sowie eine Scheibenbremse nach Anspruch 10 gelöst. Bevorzugte Weiterbildungen sind in den Unteransprüchen angegeben.

Erfindungsgemäß ist demnach vorgesehen, eine kontaktlose Überwachungseinrichtung bereitzustellen, die vorzugsweise in eine Nachstelleinrichtung einer Scheibenbremse integriert werden kann, wobei ein Messelement der Überwachungseinrichtung durch ein Vorspannelement, z.B. eine Feder, gegen eine mit einem Bremsbelag verbundene Druckspindel der Nachstelleinrichtung vorgespannt werden kann. Unter integriert wird hierbei verstanden, dass die Überwachungseinrichtung mit der Nachstelleinrichtung bzw. der Druckspindel zusammenwirkt und darüber eine Verstellung des Bremsbelages erfasst werden kann.

Dadurch wird bereits der Vorteil erreicht, dass das Messelement nicht mechanisch, z.B. durch Kleben, Verschrauben oder Schweißen, mit der Nachstelleinrichtung zu verbinden ist, so dass der Einbau des Messelementes und somit die Nachrüstbarkeit und auch die Austauschbarkeit vereinfacht wird. Das Messelement kann dazu auch variabel ausgeführt sein, so dass ein und dasselbe Messelement gegen unterschiedlich bemessene Druckspindeln vorgespannt werden kann, ohne dass dazu eine konstruktive Anpassung der Druckspindel erforderlich ist; die Herstellungskosten können dadurch verringert werden.

Die erfindungsgemäße Überwachungseinrichtung weist insbesondere das Messelement sowie eine Sensoreinheit auf, wobei die Sensoreinheit ausgebildet ist, die Relativposition des Messelementes relativ zur Sensoreinheit berührungslos zu erfassen. Die Sensoreinheit kann hierbei am Bremssattel oder an bremssattelfesten Elementen befestigt werden und das Messelement folgt durch die Vorspannung der Bewegung der Druckspindel mit dem daran befestigten Bremsbelag, so dass bei einer Bewegung des Bremsbelages relativ zum Bremssattel entlang einer Bewegungsrichtung das Messelement relativ zur Sensoreinheit auf einer zur Bewegungsrichtung parallel verlaufenden Messrichtung um einen Messweg verstellt wird.

Die Druckspindel ist dazu vorzugsweise hohlzylindrisch ausgeführt und die am Bremssattel befestigte Sensoreinheit ragt je nach Verstellung des Bremsbelages relativ zum Bremssattel unterschiedlich weit in einen Innenraum des Hohlzylinders hinein. Die gesamte Überwachungseinrichtung kann vorteilhafterweise auch nachträglich an der Scheibenbremse installiert werden, indem die Sensoreinheit am Bremssattel befestigt und derartig in den Innenraum der Druckspindel eingeschoben wird, dass das Messelement automatisch gegen die Druckspindel vorgespannt wird und dabei bereits von der Sensoreinheit beabstandet ist. Das Messelement kann dabei beispielsweise an einer im Wesentlichen ringförmigen Stirnseite der hohlzylindrischen Druckspindel anliegen und dabei eine Anlagefläche aufweisen, die für unterschiedliche Ringdurchmesser der Stirnseite der Druckspindel passend ist. Dazu kann die Anlagefläche beispielsweise derartig ausgedehnt sein, dass sie gegen Stirnseiten mit unterschiedlichen Ringdurchmessern vorgespannt werden kann.

Die Stirnseite der Druckspindel, an der die Anlagefläche des Messelementes anliegt, kann vorteilhafterweise auch eine in den Innenraum des Hohlzylinders zurückgesetzte Stirnseite sein, die beispielsweise durch eine Stufenbohrung bereitgestellt werden kann. Dadurch kann Platz gespart werden, da das Messelement im vorgespannten Zustand zumindest teilweise in den Innenraum der Druckspindel ragt und daher nach außen zwischen Druckspindel und Bremssattel weniger Platz beansprucht wird.

Dadurch kann eine einfache Nachrüstbarkeit bzw. Austauschbarkeit der Überwachungseinrichtung gewährleistet werden. Vorteilhafterweise kann beim Einbau bereits die relative Lage von dem Messelement zu der Sensoreinheit festgelegt werden; somit sind nach dem Einbau lediglich Feinjustierungen zwischen beiden Elementen der Überwachungseinrichtung nötig; der Montageaufwand verringert sich somit.

Zum Erreichen der Vorspannung ist als Vorspannelement vorzugsweise eine Feder, z.B. eine Spiralfeder, vorgesehen, die beispielsweise an einem bremssattelfesten Bereich der Sensoreinheit oder vorzugsweise auch direkt am Bremssattel sowie an einem Vorsprung des Messelementes anliegen kann und dadurch das Messelement vom Bremssattel weg beispielsweise an die Stirnseite, die ggf. auch in den Innenraum zurückgesetzt ist, der Druckspindel drückt. Dadurch kann eine Bewegung der Druckspindel unmittelbar auf das Messelement übertragen werden. Vorzugsweise umgibt die Spiralfeder das Messelement nahezu vollständig und die Sensoreinheit zumindest teilweise, so dass ein platzsparender Aufbau erreicht werden kann, da für die Feder kein zusätzlicher in Bewegungsrichtung ausgedehnter Bauraum erforderlich ist.

Somit kann in einfacher Weise eine Vorspannung auf das Messelement gebracht werden, ohne dass ein großer baulicher Aufwand nötig ist; lediglich die Feder muss sich in geeigneter Weise an einem bremssattelfesten Element abstützen. Stützt sich die Feder an einem bremssattelfesten Bereich der Sensoreinheit ab, ist eine sehr einfache Nachrüstbarkeit der Überwachungseinrichtung gegeben, da die Feder beim Einbau bereits in der richtigen Position liegt.

Durch die Integration der Überwachungseinrichtung in die Nachstelleinrichtung kann vorteilhafterweise Platz gespart werden, da mehrere zusammenwirkende Komponenten kompakt und platzsparend verbaut sind, ohne dabei zusätzlichen Bauraum zu beanspruchen, der die Scheibenbremse vergrößert. Weiterhin sind die zusammenwirkenden Komponenten nahe beieinander, so dass Bewegungen zueinander nicht über lange Wege und zusätzliche Getriebe oder dgl. zu übertragen sind und somit weniger verschleißende Bauteile nötig sind; die Zuverlässigkeit der Überwachungseinrichtung und der Scheibenbremse steigt.

Die Überwachungseinrichtung ist durch ihre Integration in der Nachstelleinrichtung ausgebildet, unmittelbar eine Relativposition zwischen der Druckspindel bzw. einem daran befestigten Bremsbelag und dem Bremssattel kontaktlos zu erfassen. Aus den Relativpositionen zu unterschiedlichen Zeitpunkten kann auf eine Bewegung bzw. auf einen zurückgelegten Weg des Bremsbelages relativ zum Bremssattel geschlossen werden. Die Bewegung des Bremsbelages erfolgt vorzugsweise in oder entgegen einer linearen Bewegungsrichtung auf eine Bremsscheibe zu bzw. von der Bremsscheibe weg.

Die Bewegung wird dabei insbesondere in Abhängigkeit einer Betätigung oder eines Lösens eines Bremswertgebers verursacht, so dass der zurückgelegte Weg des Bremsbelages einem Bremshub entspricht, d.h. der Weg, den der Bremsbelag aus einer Lösestellung, in der der Bremswertgeber nicht betätigt ist, in eine Bremsstellung bei Betätigung des Bremswertgebers zurücklegt. Weiterhin kann die Bewegung des Bremsbelages auch durch die Nachstelleinrichtung verursacht werden, die einen Verschleiß des Bremsbelages bzw. ein Lüfterspiel ausgleicht, indem der Bremsbelag aus einer Ausgangsposition um einen Nachstellweg in die Bewegungsrichtung auf die Bremsscheibe zu in eine Verschleißposition verschoben wird. Der Nachstellweg entspricht hierbei in etwa dem Verschleiß, so dass der Bremshub mit verschlissenen Bremsbelägen in etwa wieder dem Bremshub mit neuen Bremsbelägen entspricht. Der zurückgelegte Weg ist somit in diesem Fall der Nachstellweg. Beide Bewegungen sind von der Überwachungseinrichtung erfassbar.

Unter einer kontaktlosen Überwachungseinrichtung wird im Rahmen der Erfindung verstanden, dass die Sensoreinheit und das Messelement mechanisch nicht aufeinander einwirken, d.h. zumindest während der Messung körperlich voneinander getrennt sind. Dadurch kann ein Verschleiß der Überwachungseinrichtung minimiert und somit die Lebensdauer der Überwachungseinrichtung erhöht werden, da sich die Komponenten der Überwachungseinrichtung bei einer kontaktlosen Bewegung relativ zueinander nicht abnutzen.

Die Sensoreinheit ist vorzugsweise zylindrisch ausgeführt, wobei der Zylinderkörper bei entsprechender Verstellung des Bremsbelages derartig in den Innenraum der Druckspindel hineinragt, dass zwischen dem Zylinderkörper und der Druckspindel ein geringer Zwischenraum bleibt, so dass sich die Druckspindel relativ zur Sensoreinheit bewegen kann. Die Länge der Sensoreinheit entspricht mindestens dem maximalen Bremshub bzw. dem maximalen Nachstellweg bzw. einem Weg, der maximal von der Überwachungseinrichtung erfasst werden soll. Die Sensoreinheit kann dabei je nach Anwendung unterschiedlich lang ausgeführt werden, je nachdem welcher maximale Weg maximal erfasst werden soll. Eine Anpassung des Messelementes ist in diesem Fall nicht notwendig.

Das Messelement ist ringförmig ausgebildet, und umhüllt die Sensoreinheit vorzugsweise auf seiner gesamten Länge, wobei die Länge des Messelementes im Vergleich zur Länge der Sensoreinheit kleiner ist, z.B. kann die Länge des Messelementes einem Viertel oder einem Fünftel der Länge der Sensoreinheit entsprechen, und derartig gewählt sein, dass sich beide lediglich in einem kleinen Bereich - verglichen zur Länge der Sensoreinheit - überlappen bzw. das Messelement nur in diesem kleinen Bereich auf die Sensoreinheit berührungslos einwirkt.

In der Sensoreinheit ist vorzugsweise ein Hall-Sensor oder ein induktiver Sensor vorgesehen und das Messelement ist zumindest teilweise aus einem magnetischen Material gefertigt oder weist ein magnetisches Element, z.B. einen oder mehrere in die Bewegungsrichtung ausgedehnte Stifte aus einem magnetischen Material auf, das mit dem Hall-Sensor bzw. dem induktiven Sensor wechselwirkt. Da das Messelement bzw. das magnetische Material eine geringe Länge aufweist, kann vorteilhafterweise eine höhere Messgenauigkeit erreicht werden, da die Ausbildung eines homogenen magnetischen Materials mit geringer Länge weniger aufwendig ist und sich somit weniger Variationen im Magnetfeld ergeben. Die Länge des aufwändiger zu fertigenden Messelementes ist somit auch unabhängig von dem maximal zu erfassenden Weg der Überwachungseinrichtung.

Befindet sich das magnetische Material des Messelementes in einem Wirkungsbereich des Hall-Sensors, wird je nach relativer Lage eine bestimmte Hall-Spannung als Messsignal erzeugt. Im Falle eines induktiven Sensors kann beispielsweise ein Differentialtransformator (Linear Variable Differential Transformer, LVDT) aus mehreren Spulen verwendet werden, deren Kopplung bzw. Kopplungsfaktor sich bei einem im Wirkungsbereich befindlichen magnetischen Material verändert. Der Kopplungsfaktor kann als Messsignal ausgegeben werden. Es ist aber auch möglich jeden beliebigen anderen kontaktlosen Sensor zu verwenden, der in die Scheibenbremse in der oben beschriebenen Weise integriert werden kann, z.B. einen RF-Sensor zum Bestimmen des Weges über Radiowellen.

Das jeweilige Messsignal kann von der Überwachungseinrichtung oder von einer externen Verarbeitungseinheit ausgewertet werden, um die Relativposition oder die Änderung der Relativposition des Messelementes relativ zur Sensoreinheit und daraus die Relativposition zwischen Bremssattel und Bremsbelag bzw. den zurückgelegten Weg des Bremsbelages zu bestimmen.

Die Nachstelleinrichtung weist vorzugsweise weiterhin ein Druckstück auf, in das die Druckspindel eingeschraubt ist. Die Druckspindel dient dann als Halterung für den Bremsbelag und kann von dem Druckstück durch eine beliebige Betätigungseinrichtung auf die Bremsscheibe zu oder von ihr weg bewegt werden, um die Bremsscheibe in Abhängigkeit der Betätigung des Bremswertgebers abzubremsen. Wird die Druckspindel zusätzlich gegen das Druckstück verdreht, verschiebt sich der Bremsbelag je nach Drehrichtung auf die Bremsscheibe zu oder von ihr weg. Dadurch kann der Nachstellweg in Abhängigkeit des Verschleißes eingestellt werden.

Ergänzend kann auch eine Rückstelleinrichtung in die Nachstelleinrichtung integriert sein, um den Ausgleich des Verschleißes durch die Nachsteilleinrichtung wieder rückgängig zu machen, d.h. den verschlissenen Bremsbelag bzw. die Druckspindel wieder in seine Ausgangsposition zurückzustellen. Unter Rückstellen wird somit verstanden, die Nachstelleinrichtung wieder in ihre ursprüngliche Ausgangsposition ohne Verschleiß des Bremsbelages zu verschieben. Dadurch kann insbesondere bei einem Austausch der Bremsbeläge wieder der ursprüngliche bzw. ein auf den neuen Bremsbelag angepasster Bremshub eingestellt werden.

Durch die Integration der Rückstelleinrichtung in der Nachstelleinrichtung sind vorteilhafterweise keine nachträglich aufzusteckenden Rückstellwerkzeuge nötig, wodurch der Montageaufwand minimiert werden kann. Dazu kann die Rückstelleinrichtung beispielsweise als Rückstellschraube mit einem Sechskant ausgeführt sein, die durch einen herkömmlichen Sechskantschlüssel bzw. Sechskant-Schraubenschlüssel betätigt werden kann. Somit sind auch keine zusätzlichen Spezialwerkzeuge nötig, wodurch Kosten gespart werden können.

Um die Rückstellschraube in die Nachstelleinrichtung zu integrieren, kann die Sensoreinheit beispielsweise ebenfalls hohlzylindrisch ausgeführt sein, so dass die Rückstellschraube durch die Sensoreinheit geführt werden kann und dabei in das Innere der Druckspindel ragt. Dort wirkt die Rückstellschraube mit der Druckspindel derartig zusammen, dass die Druckspindel bei einer Verdrehung der Rückstellschraube gegen das Druckstück verdreht wird. Durch eine entsprechende Verdrehung der Rückstellschraube kann somit die Nachstelleinrichtung wieder in die Ausgangsposition zurückgestellt werden. Die Sensoreinheit bleibt dabei im Wesentlichen fest, d.h. die Rückstellschraube ist in der hohlzylindrischen Sensoreinheit verdrehbar gelagert.

Vorteilhafterweise ist dadurch ein kompakter Aufbau möglich und für die Rückstellung sind keine Spezialwerkzeuge nötig.

Die Erfindung wird im Folgenden anhand der beiliegenden Zeichnung erläutert. Es zeigen:
- Fig. 1: eine Scheibenbremse in einer perspektivischen Ansicht;
- Fig. 2: eine Detailansicht der Scheibenbremse gemäß Fig. 1 in einer Lösestellung;
- Fig. 2a, 2b: Detailansichten einer Überwachungseinrichtung;
- Fig. 3: die Scheibenbremse gemäß Fig. 1 in einer Bremsstellung; und
- Fig. 4: die Scheibenbremse gemäß Fig. 1 mit abgenutzten Bremsbelägen in der Bremsstellung.

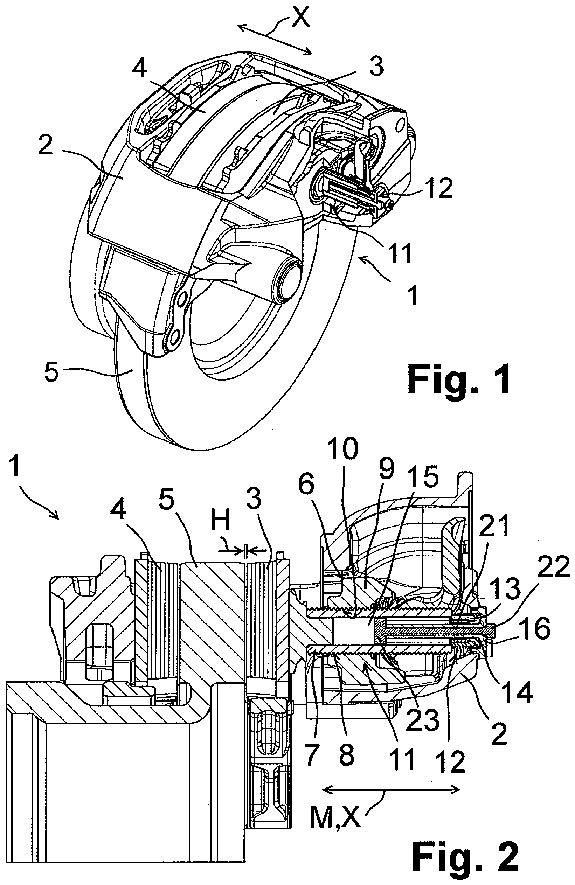

In Fig. 1 ist eine Scheibenbremse 1 in einer perspektivischen Ansicht gezeigt. Die Scheibenbremse 1 weist einen Bremssattel 2, Bremsbeläge 3, 4 und eine mit einem abzubremsenden Rad zu verbindende Bremsscheibe 5 auf, die von dem Bremssattel 2 teilweise umgriffen wird. Die Bremsbeläge 3, 4 sind in eine Bewegungsrichtung X verstellbar, so dass in Abhängigkeit eines nicht dargestellten Bremswertgebers die Bremsbeläge 3, 4 gegen die Bremsscheibe 5 gedrückt werden können, um eine gewollte Bremsung auf das abzubremsende Rad zu bewirken.

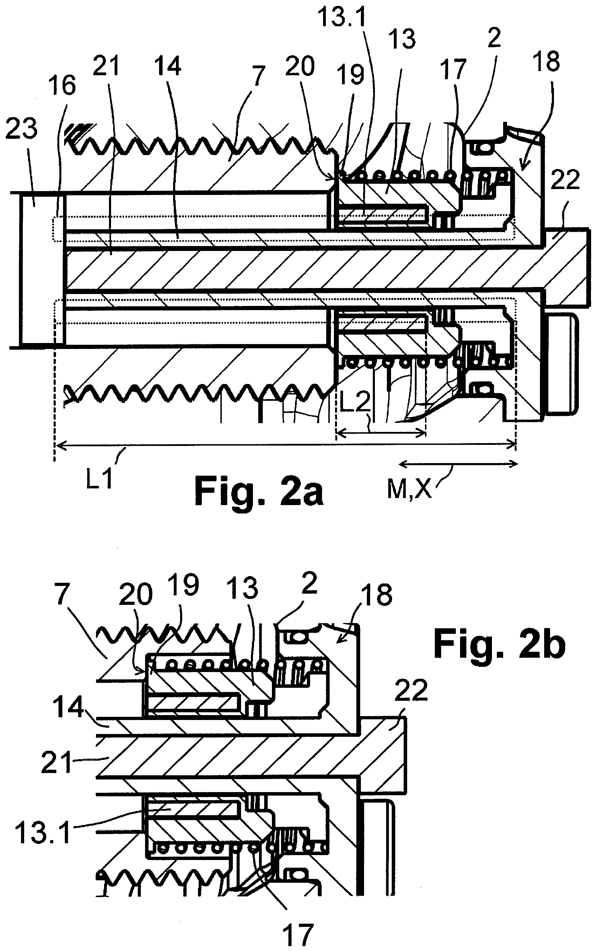

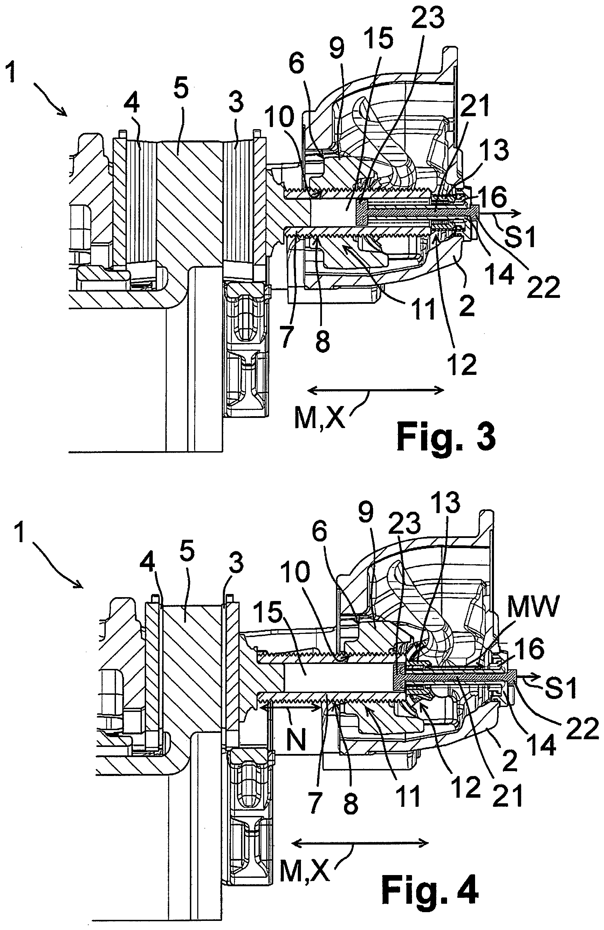

Fig. 2 zeigt eine vereinfachte Schnittansicht der Scheibenbremse 1, wobei lediglich ein relevanter Ausschnitt der Scheibenbremse 1 gezeigt ist. In der Lösestellung der Scheibenbremse 1 sind die Bremsbeläge 3, 4 um einen Bremshub H von der Bremsscheibe 5 entfernt. Der Bremshub H bezeichnet den zurückgelegten Weg, den die Bremsbeläge 3, 4 aus einer Lösestellung, in der der Bremswertgeber nicht betätigt ist, in eine Bremsstellung, die in Fig. 3 gezeigt ist, bei Betätigung des Bremswertgebers zurücklegt.

Die Bewegung der Bremsbeläge 3, 4 erfolgt gemäß dieser Ausführung entlang einer linearen Bewegungsrichtung X, die durch die am Bremssattel 2 oder an bremssattelfesten Elementen gelagerte Druckspindeleinheit 6 definiert wird. Die Druckspindeleinheit 6 weist eine Druckspindel 7 mit einem Außengewinde 8 sowie ein Druckstück 9 mit einem Innengewinde 10 auf, so dass eine Nachstelleinrichtung 11 ausgebildet wird. Die Druckspindel 7 ist in das Druckstück 9 eingeschraubt, d.h. durch eine Drehung der Druckspindel 7 gegenüber dem Druckstück 9 wird die Druckspindel 7 je nach Drehrichtung in die Bewegungsrichtung X um einen Nachstellweg N verstellt, was in Fig. 4 dargestellt ist.

Dies dient dazu, einen Verschleiß des mit der Druckspindel 7 verbundenen Bremsbelages 3 auszugleichen, indem der Bremsbelag 3 um einen den Verschleiß ausgleichenden Nachstellweg N aus einer Ausgangsposition in Richtung auf die Bremsscheibe 5 zu in eine Verschleißposition verstellt wird.

Das Druckstück 9 dient weiterhin der Betätigung der Druckspindeleinheit 6 in Abhängigkeit der Betätigung des Bremswertgebers. Wird durch den Bremswertgeber eine Betätigung der Bremse vorgegeben, so wird das Druckstück 9 durch eine beliebige Anordnung in die Bewegungsrichtung X auf die Bremsscheibe 5 zu bewegt, so dass sich auch die eingeschraubte Druckspindel 7 mit dem damit verbundenen Bremsbelag 3 an die Bremsscheibe 5 annähert und an diese gedrückt wird, um eine gewünschte Bremswirkung zu erreichen. Beim Lösen der Bremse wird das Druckstück 9 beispielsweise durch eine nicht dargestellte Federvorspannung wieder zurückbewegt, so dass der Bremsbelag 3 die Bremsscheibe 5 nicht mehr berührt.

Somit bewegt sich bei einer Betätigung der Bremse die gesamte Druckspindeleinheit 6 auf die Bremsscheibe 5 zu. Diese Bewegung findet relativ zum Bremssattel 2 statt, an dem die Druckspindeleinheit 6 in beliebiger Weise verschiebbar gelagert ist.

Um den Verschleiß des Bremsbelags 3 nicht nur ausgleichen, sondern auch messen zu können, ist eine Überwachungseinrichtung 12 vorgesehen, die in der Nachstelleinrichtung 11 integriert ist, d.h. mit der Nachstelleinrichtung 11 zusammenwirkt und deren relative Position zum Bremssattel 2 misst. Die Überwachungseinrichtung 12 weist dazu ein Messelement 13 und eine Sensoreinheit 14 auf. Die Sensoreinheit 14 ragt im Zustand gemäß Fig. 2 zumindest teilweise in einen Innenraum 15 in der als Hohlzylinder ausgeführten Druckspindel 7 und ist an dem Bremssattel 2 befestigt. Bei einer Verstellung des Bremsbelages 3, 4 bzw. der Druckspindel 7 verschiebt sich die Sensoreinheit 14 relativ zur Druckspindel 7, d.h. die Sensoreinheit 14 ragt je nach Verstellung des Bremsbelages 3, 4 unterschiedlich tief in den Innenraum 15 hinein.

Das Messelement 13 ist gemäß dieser Ausführung gegen die Druckspindel 7 vorgespannt. Dazu ist gemäß Fig. 2a eine das Messelement 13 in die Bewegungsrichtung X nahezu vollständig und die Sensoreinheit 14 zumindest teilweise umgebende Spiralfeder 17 als Vorspannelement vorgesehen, die sich zum einen an einem bremssattelfesten Bereich 18 der Sensoreinheit 14 und zum anderen an einem Vorsprung 19 an dem Messelement 13 abstützt. Durch die Federspannung der Spiralfeder 17 wird das Messelement 13 vom Bremssattel 2 weg an eine im Wesentlichen ringförmige Stirnseite 20 der Druckspindel 7 gedrückt. Dadurch folgt das Messelement 13 der Bewegung der Druckspindel 7 auf die Bremsscheibe 5 zu. Bei einer entgegengesetzten Bewegung der Druckspindel 7 drückt diese das Messelement 13 gegen die Federkraft der Spiralfeder 17 wieder in Richtung des Bremssattels 2.

Gemäß Fig. 2b ist eine alternative Ausführung angegeben, wobei die im Wesentlichen ringförmige Stirnseite 20, gegen die das Messelement 13 vorgespannt ist, in den Innenraum 15 zurückgesetzt ist, so dass das Messelement 13 im vorgespannten Zustand im Gegensatz zu der Ausführung der Fig. 2a weiter in die Druckspindel 7 hineinragt und somit zwischen der Druckspindel 7 und dem Bremssattel 2 bzw. dem bremssattelfesten Bereich 18 weniger Platz benötigt wird.

Somit wird das Messelement 13 entlang einer zur Bewegungsrichtung X parallelen Messrichtung M relativ zur Sensoreinheit 14 bewegt, wenn die Druckspindel 7 entlang der Bewegungsrichtung X verstellt wird.

Die Sensoreinheit 14 ist ausgebildet, eine Relativposition bzw. eine Änderung der Relativposition des Messelementes 13 relativ zur Sensoreinheit 14 zu erfassen sobald sich das Messelement 13 in einem Wirkungsbereich 16 der Sensoreinheit 14 befindet. Die Messung erfolgt dabei kontaktlos, d.h. das Messelement 13 und die Sensoreinheit 14 berühren sich nicht. Die Sensoreinheit 14 weist dazu beispielsweise einen oder mehrere Hall-Sensoren auf und das Messelement 13 ein magnetisches Element 13.1, z.B. ein oder mehrere in die Bewegungsrichtung X ausgedehnte magnetische Stifte, das in das Messelement 13 integriert ist. Gelangt das magnetische Element 13.1 in den Wirkungsbereich 16 des Hall-Sensors, der durch die Empfindlichkeit des Hall-Sensors bestimmt wird, verändert sich in diesem eine Hall-Spannung, die von einer Elektronik in der Sensoreinheit 14 überwacht und ausgewertet werden kann. Daraus kann die Relativposition oder eine Veränderung der Relativposition des Messelementes 13 relativ zur Sensoreinheit 14 bestimmt werden und daraus einen in Fig. 4 dargestellten zurückgelegten Messweg MW des Messelementes 13 relativ zur Sensoreinheit 14, z.B. durch Bilden der Differenz zwischen zwei Relativpositionen. Die berechneten Werte können zur weiteren Verarbeitung über ein Messsignal S1 an eine nicht dargestellte externe Recheneinheit ausgegeben werden.

Es ist aber auch möglich, die Sensoreinheit 14 als einen induktiven Sensor, insbesondere einen Differentialtransformator (Linear Variable Differential Transformer, LVDT) auszubilden, wobei die Sensoreinheit 14 dazu mehrere Spulen aufweist und das Messelement 13 einen als magnetisches Element 13.1 ausgebildeten magnetischen Kern. Wird der magnetische Kern in der Nähe der Spulen bewegt, verändert sich ein Kopplungswert der Spulen, der von der Elektronik der Sensoreinheit 14 ausgewertet werden kann, um auf den Messweg MW zu schließen.

Somit kann eine Bewegung der Druckspindel 7 aus der Bewegung des Messelementes 13 entlang des Messweges MW abgeleitet werden, da beide durch die Vorspannung miteinander verbunden sind. Da der Messweg MW nahezu parallel zum Bremshub H bzw. zum Nachstellweg N ausgerichtet ist, entspricht der Messweg MW direkt einem der beiden Größen, je nachdem woraus die Bewegung der Druckspindel 7 folgt. Dadurch kann der zurückgelegte Weg direkt erfasst und über das Messsignal S1 ausgegeben werden, ohne den Messweg MW kompliziert umzurechnen.

Aus dem erfassten Bremshub H kann beispielsweise erkannt werden, ob die Scheibenbremse 1 ordnungsgemäß funktioniert und den vorgegebenen Bremshub H sowohl beim Betätigen als auch beim Lösen der Scheibenbremse 1 zurücklegt. Wird anhand des erfassten Bremshubs H von der Überwachungseinrichtung 12 oder einer nicht dargestellten externen Verarbeitungseinrichtung erkannt, dass der erwartete Bremshub H nicht vollständig zurückgelegt wurde, kann beispielsweise darauf geschlossen werden, dass die Scheibenbremse 1 defekt ist. Dadurch kann zusätzlich eine einfache Überwachung des Bremshubs H der Scheibenbremse 1 erreicht werden.

Die Sensoreinheit 14 ist gemäß dieser Ausführungsform als ein Hohlzylinder ausgeführt und das Messelement 13 ist im Wesentlichen ringförmig um die Sensoreinheit 14 angeordnet, so dass auch eine räumliche Messung beispielsweise über einen 3D-Hall-Sensor möglich ist. Die Sensoreinheit 14 ist vorzugsweise aus Kunststoff gefertigt, z.B. in einem Spritzgussverfahren und die Elektronik und die Sensorik sind in dem Kunststoff eingebettet und dadurch vor äußeren Einflüssen geschützt.

Eine Länge L1 der Sensoreinheit 14 bzw. des Wirkungsbereiches 16 der Sensoreinheit 14 entspricht mindestens dem maximalen Bremshub H bzw. dem maximalen Nachstellweg N, d.h. dem maximalen Weg der durch die Überwachungseinrichtung 12 erfasst werden soll. Eine Länge L2 des ringförmigen Messelementes 13 bzw. des magnetischen Elemente 13.1 entspricht gemäß dieser Ausführung in etwa einem Fünftel der Länge L1 der Sensoreinheit 14, so dass das Messelement 13 auf die Sensoreinheit 14 lediglich in einem sehr kleinen Bereich verglichen zur Länge L1 der Sensoreinheit 14 einwirkt.

Der maximale Nachstellweg N der Druckspindel 7 beträgt in etwa 45 mm, so dass Länge L1 der Sensoreinheit 14 zumindest in dieser Größenordnung liegt, je nach Anwendung aber auch kürzer oder länger sein kann. Dazu ist lediglich eine Anpassung der Sensoreinheit 14 erforderlich, die dann entsprechend tiefer oder weniger tief in den Innenraum 15 hineinragt.

Gemäß diesem Ausführungsbeispiel ist in der hohlzylindrischen Sensoreinheit 14 eine als Rückstellschraube 21 ausgeführte Rückstelleinrichtung vorgesehen, die durch die Sensoreinheit 14 hindurch in den Innenraum 15 der Druckspindel 7 ragt. Auf der anderen Seite der Rückstellschraube ist ein Sechskant 22 vorgesehen, mit dem die Rückstellschraube 21 mit einem entsprechenden Sechskant-Schraubenschlüssel verdreht werden kann. Im Innenraum 15 wirkt die Rückstellschraube 21 über eine Rückstellmechanik 23 mit der Druckspindel 7 derartig zusammen, dass bei einer Verdrehung der Rückstellschraube 21 über den Sechskant 22 die Druckspindel 7 gegen das Druckstück 9 verdreht wird, so dass die Druckspindel 7 aus der Verschleißposition wieder in ihre Ausgangsposition verstellt werden kann, in der die Bremsbeläge 3, 4 ausgetauscht werden können.

Dazu kann die Rückstellmechanik 23 beispielsweise von Innen in die in Bewegungsrichtung X verlaufenden Nuten der Druckspindel 7 eingreifen, so dass bei einer Verdrehung der Rückstellmechanik 23 die Druckspindel 7 über die Nuten mitgenommen wird und sich somit in dem Druckstück 9 ebenfalls verdreht.

## Patentansprüche

1. Überwachungseinrichtung (12) für eine Scheibenbremse (1), mindestens aufweisend:
eine Sensoreinheit (14) zur Anbringung an einem Bremssattel (2) einer Scheibenbremse (1) und ein Messelement (13),
wobei die Sensoreinheit (14) ausgebildet ist, eine Relativposition des relativ zur Sensoreinheit (14) beweglichen Messelementes (13) zu erfassen,
wobei die Sensoreinheit (14) und das Messelement (13) voneinander beabstandet sind zum Ausbilden einer kontaktlosen
Überwachungseinrichtung (12), wobei
zwischen dem Messelement (13) und der Sensoreinheit (14) ein Vorspannelement (17) angeordnet ist zum Vorspannen des Messelementes (13) gegen eine Druckspindel (7) der Scheibenbremse (1), **dadurch gekennzeichnet, dass** das Messelement (13) ringförmig ausgebildet ist und die Sensoreinheit (14) entlang einer Bewegungsrichtung (X) lediglich teilweise umgibt, wobei eine Länge (L2) des Messelements (13) in die Bewegungsrichtung (X) kleiner ist als eine Länge (L1) der Sensoreinheit (14) in die Bewegungsrichtung (X).

2. Überwachungseinrichtung (12) nach Anspruch 1, **dadurch gekennzeichnet, dass** die Überwachungseinrichtung (12) in eine Nachstelleinrichtung (11) einer Scheibenbremse (1) integrierbar ist.

3. Überwachungseinrichtung (12) nach Anspruch 1 oder 2, **dadurch gekennzeichnet, dass** das Messelement (13) die Sensoreinheit (14) im Wesentlichen ringförmig umgibt.

4. Überwachungseinrichtung (12) nach einem der vorhergehenden Ansprüche, **dadurch gekennzeichnet, dass** das Vorspannelement (17) eine Feder ist.

5. Überwachungseinrichtung (12) nach Anspruch 4, **dadurch gekennzeichnet, dass** die Feder (17) eine Spiralfeder ist, die die Sensoreinheit (14) und das Messelement (13) entlang einer Bewegungsrichtung (X) zumindest teilweise umgibt.

6. Überwachungseinrichtung (12) nach Anspruch 4 oder 5, **dadurch gekennzeichnet, dass** sich die Feder (17) zwischen einem bremssattelfesten Bereich (18) an der Sensoreinheit (14) und dem Messelement (13) erstreckt zum Erreichen einer Vorspannung des Messelementes (13).

7. Überwachungseinrichtung (12) nach einem der vorhergehenden Ansprüche, **dadurch gekennzeichnet, dass** die Sensoreinheit (14) als eine Hall-Sensoreinheit ausgeführt ist und das Messelement (13) ein magnetisches Material (13.1) umfasst zum Bewirken einer Spannungsänderung in der Hall-Sensoreinheit in Abhängigkeit der Relativposition des Messelementes (13) relativ zur Sensoreinheit (14).

8. Überwachungseinrichtung (12) nach einem der Ansprüche 1 bis 6, **dadurch gekennzeichnet, dass** die Sensoreinheit (14) als eine induktive Sensoreinheit mit mehreren Spulen ausgeführt ist und das Messelement (13) ein magnetisches Material (13.1) umfasst zum Verändern einer Kopplung zwischen den Spulen in Abhängigkeit der Relativposition des Messelementes (13) relativ zur Sensoreinheit (14).

9. Überwachungseinrichtung (12) nach einem der Ansprüche 1 bis 6, **dadurch gekennzeichnet, dass** die Sensoreinheit (14) als eine RF-Sensoreinheit ausgebildet ist zum Erkennen einer Relativposition des Messelementes (13) relativ zur Sensoreinheit (14) in Abhängigkeit von Radiowellen.

10. Scheibenbremse (1) für ein Kraftfahrzeug, mindestens aufweisend:
eine Bremsscheibe (5),
einen die Bremsscheibe (5) umgreifenden Bremssattel (2),
einen Bremsbelag (3, 4), der in Abhängigkeit einer Betätigung eines Bremswertgebers relativ zum Bremssattel (2) verstellbar ist zum Bewirken einer Abbremsung der Bremsscheibe (5),
wobei der Bremsbelag (3, 4) an einer Druckspindel (7) einer Nachstelleinrichtung (11) befestigt ist zum zusätzlichen Verstellen des Bremsbelages (3, 4) in Abhängigkeit eines Verschleißes des Bremsbelages (3, 4), und
eine in der Nachstelleinrichtung (11) integrierte Überwachungseinrichtung (12) gemäß einem der vorherigen Ansprüche zum Erfassen einer Relativposition zwischen der Druckspindel (7) und dem Bremssattel (2),
wobei das Messelement (13) der Überwachungseinrichtung (12) gegen die Druckspindel (7) vorgespannt ist zum Übertragen einer Bewegung der Druckspindel (7) auf das Messelement (13), **dadurch gekennzeichnet, dass** die Druckspindel (7) hohlzylindrisch ausgeführt ist und das Messelement (13) gegen eine im Wesentlichen ringförmige Stirnseite (20) der Druckspindel (7) vorgespannt ist und wobei die Sensoreinheit (14) in Abhängigkeit der Relativposition zwischen dem Bremssattel (2) und der Druckspindel (7) in einen Innenraum (15) in der hohlzylindrischen Druckspindel (7) ragt.

11. Scheibenbremse (1) nach Anspruch 10, **dadurch gekennzeichnet, dass** sich die Feder (17) zwischen einem bremssattelfesten Bereich (18) an der Sensoreinheit (14) und dem Messelement (13) erstreckt zum Erreichen einer Vorspannung des Messelementes (13) gegen die Druckspindel (7).

12. Scheibenbremse (1) nach einem der Ansprüche 10 bis 11, **dadurch gekennzeichnet, dass** die Druckspindel (7) verdrehbar in ein Druckstück (9) eingeschraubt ist und die Druckspindel (7) bei einer Verdrehung gegen das Druckstück (9) um einen Nachstellweg (N) aus einer Ausgangsposition in eine Verschleißposition verstellbar ist zum Ausgleichen eines Verschleißes des Bremsbelages (3, 4).

13. Scheibenbremse (1) nach Anspruch 12, **dadurch gekennzeichnet, dass** weiterhin eine Rückstelleinrichtung (21, 22, 23) zum Rückstellen der Druckspindel (7) aus der Verschleißstellung zurück in die Ausgangsstellung vorgesehen ist und die Rückstelleinrichtung (21, 22, 23) in der Nachstelleinrichtung (11) integriert ist.

14. Scheibenbremse nach Anspruch 13, **dadurch gekennzeichnet, dass** die Rückstelleinrichtung (21, 22, 23) zumindest teilweise von der Überwachungseinrichtung (12) umgeben ist.

15. Scheibenbremse (1) nach Anspruch 13 oder 14, **dadurch gekennzeichnet, dass** die Rückstelleinrichtung (21, 22, 23) eine Rückstellmechanik (23) aufweist, die derartig mit der Druckspindel (7) zusammenwirkt, dass eine Verdrehung der Rückstelleinrichtung (21, 22, 23) eine Verdrehung der Druckspindel (7) in dem Druckstück (9) bewirkt zum Rückstellen der Druckspindel (7) aus der Verschleißstellung zurück in die Ausgangsstellung.

## Claims

1. Monitoring device (12) for a disc brake (1), at least having:
a sensor unit (14) for attaching to a brake calliper (2) of a disc brake (1), and a measuring element (13), the sensor unit (14) being configured to detect a relative position of the measuring element (13) which can be moved relative to the sensor unit (14),
the sensor unit (14) and the measuring element (13) being spaced apart from one another in order to configure a contactless monitoring device (12),
a prestressing element (17) being arranged between the measuring element (13) and the sensor unit (14) in order to prestress the measuring element (13) against a pressure spindle (7) of the disc brake, **characterized in that** the measuring element (13) is of annular configuration and surrounds the sensor unit (14) merely partially along a movement direction (X), a length (L2) of the measuring element (13) in the movement direction (X) being smaller than a length (L1) of the sensor unit (14) in the movement direction (X).

2. Monitoring device (12) according to Claim 1, **characterized in that** the monitoring device (12) can be integrated into an adjusting device (11) of a disc brake (1).

3. Monitoring device (12) according to Claim 1 or 2, **characterized in that** the measuring element (13) surrounds the sensor unit (14) in a substantially annular manner.

4. Monitoring device (12) according to one of the preceding claims, **characterized in that** the prestressing element (17) is a spring.

5. Monitoring device (12) according to Claim 4, **characterized in that** the spring (17) is a spiral spring which surrounds the sensor unit (14) and the measuring element (13) at least partially along a movement direction (X).

6. Monitoring device (12) according to Claim 4 or 5, **characterized in that** the spring (17) extends between a region (18) which is fixed to the brake calliper on the sensor unit (14) and the measuring element (13) in order to achieve a prestress of the measuring element (13) .

7. Monitoring device (12) according to one of the preceding claims, **characterized in that** the sensor unit (14) is configured as a Hall sensor unit, and the measuring element (13) comprises a magnetic material (13.1) in order to bring about a voltage change in the Hall sensor unit in a manner which is dependent on the relative position of the measuring element (13) relative to the sensor unit (14).

8. Monitoring device (12) according to one of Claims 1 to 6, **characterized in that** the sensor unit (14) is configured as an inductive sensor unit with a plurality of coils, and the measuring element (13) comprises a magnetic material (13.1) in order to change a coupling between the coils in a manner which is dependent on the relative position of the measuring element (13) relative to the sensor unit (14).

9. Monitoring device (12) according to one of Claims 1 to 6, **characterized in that** the sensor unit (14) is configured as an RF sensor unit for detecting a relative position of the measuring element (13) relative to the sensor unit (14) in a manner which is dependent on radio waves.

10. Disc brake (1) for a motor vehicle, at least having:
a brake disc (5),
a brake calliper (2) which engages around the brake disc (5),
a brake lining (3, 4) which can be adjusted relative to the brake calliper (2) in a manner which is dependent on an actuation of a brake transducer in order to bring about a braking operation of the brake disc (5),
the brake lining (3, 4) being fastened to a pressure spindle (7) of an adjusting device (11) for the additional adjustment of the brake lining (3, 4) in a manner which is dependent on a wear state of the brake lining (3, 4), and
a monitoring device (12) according to one of the preceding claims which is integrated into the adjusting device (11) for detecting a relative position between the pressure spindle (7) and the brake calliper (2),
the measuring element (13) of the monitoring device (12) being prestressed against the pressure spindle (7) in order to transfer a movement of the pressure spindle (7) to the measuring element (13), **characterized in that**
the pressure spindle (7) is of hollow-cylindrical configuration, and the measuring element (13) is prestressed against a substantially annular end side (20) of the pressure spindle (7), and the sensor unit (14) protruding into an interior space (15) in the hollow-cylindrical pressure spindle (7) in a manner which is dependent on the relative position between the brake calliper (2) and the pressure spindle (7).

11. Disc brake (1) according to Claim 10, **characterized in that** the spring (17) extends between a region (18) which is fixed to the brake calliper on the sensor unit (14) and the measuring element (13) in order to achieve a prestress of the measuring element (13) against the pressure spindle (7).

12. Disc brake (1) according to either of Claims 10 and 11, **characterized in that** the pressure spindle (7) is screwed rotatably into a pressure piece (9), and it being possible, in the case of a rotation with respect to the pressure piece (9), for the pressure spindle (7) to be adjusted by an adjusting travel (N) out of a starting position into a wear position in order to compensate for a wear state of the brake lining (3, 4).

13. Disc brake (1) according to Claim 12, **characterized in that**, furthermore, a restoring device (21, 22, 23) is provided for restoring the pressure spindle (7) out of the wear position back into the starting position, and the restoring device (21, 22, 23) being integrated into the adjusting device (11).

14. Disc brake according to Claim 13, **characterized in that** the restoring device (21, 22, 23) is surrounded at least partially by the monitoring device (12).

15. Disc brake (1) according to Claim 16 or 17, **characterized in that** the restoring device (21, 22, 23) has a restoring mechanism (23) which interacts with the pressure spindle (7) in such a way that a rotation of the restoring device (21, 22, 23) brings about a rotation of the pressure spindle (7) in the pressure piece (9) in order to restore the pressure spindle (7) out of the wear position back into the starting position.

## Revendications

1. Dispositif de surveillance (12) pour un frein à disque (1), comprenant au moins :
une unité de détection (14) destinée à être montée sur un étrier de frein (2) d'un frein à disque (1) et un élément de mesure (13),
l'unité de détection (14) étant configurée pour détecter une position relative de l'élément de mesure (13) qui est mobile par rapport à l'unité de détection (14),
l'unité de détection (14) et l'élément de mesure (13) étant espacés l'un de l'autre en vue de former un dispositif de surveillance (12) sans contact,
un élément de précontrainte (17) étant disposé entre l'élément de mesure (13) et l'unité de détection (14), destiné à précontraindre l'élément de mesure (13) contre une broche de pressage (7) du frein à disque (1), **caractérisé en ce que** l'élément de mesure (13) est de configuration annulaire et n'entoure l'unité de détection (14) que partiellement le long d'une direction de mouvement (X), une longueur (L2) de l'élément de mesure (13) dans la direction de mouvement (X) étant inférieure à une longueur (L1) de l'unité de détection (14) dans la direction de mouvement (X).

2. Dispositif de surveillance (12) selon la revendication 1, **caractérisé en ce que** le dispositif de surveillance (12) peut être intégré dans un dispositif de rattrapage (11) d'un frein à disque (1).

3. Dispositif de surveillance (12) selon la revendication 1 ou 2, **caractérisé en ce que** l'élément de mesure (13) entoure l'unité de détection (14) sensiblement de manière annulaire.

4. Dispositif de surveillance (12) selon l'une des revendications précédentes, **caractérisé en ce que** l'élément de précontrainte (17) est un ressort.

5. Dispositif de surveillance (12) selon la revendication 4, **caractérisé en ce que** le ressort (17) est un ressort hélicoïdal qui entoure au moins partiellement l'unité de détection (14) et l'élément de mesure (13) le long d'une direction de mouvement (X).

6. Dispositif de surveillance (12) selon la revendication 4 ou 5, **caractérisé en ce que** le ressort (17) s'étend entre une zone fixe (18) de l'étrier de frein au niveau de l'unité de détection (14) et l'élément de mesure (13) en vue d'atteindre une précontrainte de l'élément de mesure (13).

7. Dispositif de surveillance (12) selon l'une des revendications précédentes, **caractérisé en ce que** l'unité de détection (14) est réalisée sous la forme d'une unité de détection à effet Hall et l'élément de mesure (13) comporte un matériau magnétique (13.1) pour provoquer une variation de tension dans l'unité de détection à effet Hall en fonction de la position relative de l'élément de mesure (13) par rapport à l'unité de détection (14).

8. Dispositif de surveillance (12) selon l'une des revendications 1 à 6, **caractérisé en ce que** l'unité de détection (14) est réalisée sous la forme d'une unité de détection inductive comprenant plusieurs bobines et l'élément de mesure (13) comporte un matériau magnétique (13.1) pour modifier un couplage entre les bobines en fonction de la position relative de l'élément de mesure (13) par rapport à l'unité de détection (14) .

9. Dispositif de surveillance (12) selon l'une des revendications 1 à 6, **caractérisé en ce que** l'unité de détection (14) est réalisée sous la forme d'une unité de détection RF configurée pour reconnaître une position relative de l'élément de mesure (13) par rapport à l'unité de détection (14) en fonction d'ondes radioélectriques.

10. Frein à disque (1) pour un véhicule automobile, comprenant au moins :
un disque de frein (5),
un étrier de frein (2) qui enveloppe le disque de frein (5),
une garniture de frein (3, 4) qui peut être positionnée par rapport à l'étrier de frein (2) en fonction d'un actionnement d'un transmetteur de valeur de freinage en vue de produire un freinage du disque de frein (5),
la garniture de frein (3, 4) étant fixée à une broche de pressage (7) d'un dispositif de rattrapage (11) en vue d'un positionnement supplémentaire de la garniture de frein (3, 4) en fonction d'une usure de la garniture de frein (3, 4), et
un dispositif de surveillance (12) selon l'une des revendications précédentes, intégré dans le dispositif de rattrapage (11) pour détecter une position relative entre la broche de pressage (7) et l'étrier de frein (2), l'élément de mesure (13) du dispositif de surveillance (12) étant précontraint contre la broche de pressage (7) en vue de transmettre un mouvement de la broche de pressage (7) sur l'élément de mesure (13), **caractérisé en ce que** la broche de pressage (7) est réalisée de manière cylindrique creuse et l'élément de mesure (13) est précontraint contre un côté frontal (20) sensiblement annulaire de la broche de pressage (7) et l'unité de détection (14) fait saillie dans un espace interne (15) dans la broche de pressage (7) cylindrique creuse en fonction de la position relative entre l'étrier de frein (2) et la broche de pressage (7).

11. Frein à disque (1) selon la revendication 10, **caractérisé en ce que** le ressort (17) s'étend entre une zone fixe (18) de l'étrier de frein au niveau de l'unité de détection (14) et l'élément de mesure (13) en vue d'atteindre une précontrainte de l'élément de mesure (13) contre la broche de pressage (7).

12. Frein à disque (1) selon l'une des revendications 10 et 11, **caractérisé en ce que** la broche de pressage (7) est vissée de manière rotative dans une pièce de pressage (9) et la broche de pressage (7), lors d'une rotation contre la pièce de pressage (9) d'une course de rattrapage (N), peut être positionnée d'une position initiale dans une position d'usure en vue de compenser une usure de la garniture de frein (3, 4) .

13. Frein à disque (1) selon la revendication 12, **caractérisé en ce qu'**un dispositif de rappel (21, 22, 23) destiné à rappeler la broche de pressage (7) de la position d'usure dans à la position initiale est en outre présent et le dispositif de rappel (21, 22, 23) est intégré dans le dispositif de rattrapage (11).

14. Frein à disque selon la revendication 13, **caractérisé en ce que** le dispositif de rappel (21, 22, 23) est au moins partiellement entouré par le dispositif de surveillance (12).

15. Frein à disque (1) selon la revendication 16 ou 17, **caractérisé en ce que** le dispositif de rappel (21, 22, 23) possède un mécanisme de rappel (23) qui coopère avec la broche de pressage (7) de telle sorte qu'une torsion du dispositif de rappel (21, 22, 23) provoque une torsion de la broche de pressage (7) dans la pièce de pressage (9) en vue de rappeler la broche de pressage (7) de la position d'usure en retour à la position initiale.
